# EUROPÄISCHE PATENTANMELDUNG

(11) **EP 2 674 027 A2**
(43) Veröffentlichungstag der Anmeldung: **18.12.2013**
(21) Anmeldenummer: 13166931.9
(22) Anmeldetag: 08.05.2013
(51) Int. Cl.: A01K 1/015

(54) **Bodenbelagsplatte**

(30) Priorität: 14.06.2012 DE 102012209972
(71) Anmelder: Kraiburg Elastik GmbH, 84529 Tittmoning (DE)
(72) Erfinder: Steinberger, Rupert, 84570 Polling (DE); Stribl, Michael, 84550 Feichten (DE); Klinger, Martin, 84489 Burghausen (DE)
(74) Vertreter: Ruttensperger, Bernhard

(57) **Zusammenfassung**

Eine Bodenbelagsplatte für einen Tierstall umfasst einen auf einem Untergrund zu verlegenden Plattenkörper (11) mit einer Untergrundauflagefläche (16) an einer Untergrundauflageseite (18) und einer Tierauflagefläche (12) an einer Tierauflageseite (14), wobei ein Abstand zwischen der Tierauflagefläche (12) und der Untergrundauflagefläche (16) von einem ersten Plattenlängsendbereich (22) zu einem zweiten Plattenlängsendbereich (24) abnimmt.

## Beschreibung

Die vorliegende Erfindung betrifft eine Bodenbelagsplatte für einen Tierstall sowie ein Verfahren zur Herstellung einer Platte, beispielsweise einer derartigen Bodenbelagsplatte.

Es ist bekannt, in Tierställen auf einem festen, beispielsweise mit Betonmaterial aufgebautem Untergrund elastische Bodenbelagsplatten aufzubringen, um dadurch einerseits den Komfort für darauf stehende, liegende oder sich bewegende Tiere zu erhöhen, andererseits auch die Verletzungsgefahr für die Tiere zu mindern. Der feste Untergrund ist dabei zumindest bereichsweise als so genannter Spaltenboden aufgebaut, um das Hindurchfallen von Tierausscheidungen zu ermöglichen und somit die Tieraufstandsfläche möglichst rein zu halten. Um das Ansammeln der Ausscheidungen, insbesondere flüssiger Ausscheidungen, in einem zentralen Bereich zu unterstützen, kann der feste Untergrund bereichsweise geneigt aufgebaut sein, so dass die darauf liegenden Bodenbelagsplatten an ihrer Tierauflageseite eine entsprechende Neigung aufweisen und somit das Abfließen der Ausscheidungen unterstützen. Insbesondere bei älteren Tierställen, welche grundsätzlich noch nicht für das Aufbringen derartiger im Allgemeinen elastisch ausgebildeter Bodenbelagsplatten konzipiert wurden, ist ein derartiges Gefälle zumeist nicht vorgesehen, so dass das Auslegen von Bodenbelagsplatten auf einem derartig im Wesentlichen plan ausgebildeten Untergrund das Problem einer mangelnden Unterstützung der Abfuhr von insbesondere flüssigen Tierausscheidungen mit sich bringt.

Es ist die Zielsetzung der vorliegenden Erfindung, eine Bodenbelagsplatte für einen Tierstall vorzusehen, mit welcher das Sammeln von Tierausscheidungen in dafür vorgesehenen Bereichen unterstützt werden kann. Erfindungsgemäß wird diese Aufgabe gelöst durch eine Bodenbelagsplatte für einen Tierstall, umfassend einen auf einem Untergrund zu verlegenden Plattenkörper mit einer Untergrundauflagefläche an einer Untergrundauflageseite und einer Tierauflagefläche an einer Tierauflageseite, wobei ein Abstand zwischen der Tierauflagefläche und der Untergrundauflagefläche von einem ersten Plattenlängsendbereich zu einem zweiten Plattenlängsendbereich abnimmt.

Da in die erfindungsgemäß aufgebaute Bodenbelagsplatte selbst ein Gefälle integriert ist, eignet sie sich insbesondere auch zum Einsatz in älteren Ställen, die mit einem im Wesentlichen ebenen, also ohne Gefälle bereitgestellten festen Untergrund aufgebaut sind. Auf den mit Gefälle, also geneigter Tierauflageseite, ausgebildeten Bodenbelagsplatten können insbesondere die flüssigen Tierausscheidungen sich dem Gefälle folgend in einer Richtung bewegen und dort in einem zentralen, gassenartigen Bereich eines Tierstalls gesammelt werden bzw. abgeführt werden.

Es ist in diesem Zusammenhang darauf hinzuweisen, dass im Sinne der vorliegenden Erfindung der Aussage, dass der angesprochene Abstand vom ersten Plattenlängsendbereich zum zweiten Plattenlängsendbereich abnimmt, derart zu interpretieren ist, dass ein derartiges in die Bodenbelagsplatte integriertes Gefälle über den wesentlichen Längenbereich einer Bodenbelagsplatte, also wenigstens 50%, vorzugsweise mehr als 70% der Länge einer derartigen Bodenbelagsplatte, bereitgestellt ist.

Um den durch eine geneigte Tierauflageseite bereitgestellten Reinigungseffekt möglichst effizient zu nutzen, kann vorgesehen sein, dass der Abstand von einem am ersten Plattenlängsendbereich vorgesehenen ersten Querrandbereich zu einem am zweiten Plattenlängsendbereich vorgesehenen zweiten Querrandbereich abnimmt. Dabei können beispielsweise zum Einbringen von Verankerungselementen oder dergleichen angrenzend an den ersten Querrandbereich oder/und den zweiten Querrandbereich Abschnitte mit im Wesentlichen konstantem Abstand, also im Wesentlichen ohne Gefälle bereitgestellte Abschnitte, vorgesehen sein.

Gemäß einem weiteren den Liegekomfort durch Bereitstellen einer bei Auflage eines Tieres sich bildenden Muldenkonfiguration erhöhenden Aspekt der vorliegenden Erfindung wird vorgeschlagen, dass in wenigstens einem Längenabschnitt des Plattenkörpers der Abstand sich in einer Plattenquerrichtung verändert.

Das Integrieren derartiger spezieller Auflagebereiche für ein Tier kann beispielsweise derart erfolgen, dass an dem Plattenkörper wenigstens ein, vorzugsweise zwei bezüglich der Plattenquerrichtung nebeneinander positionierte Tierauflagebereiche vorgesehen sind, wobei jeder Tierauflagebereich zwei bezüglich der Plattenquerrichtung nebeneinander liegende Seitenbereiche und dazwischen einen Mittenbereich aufweist.

Dabei kann in wenigstens einem Längenbereich des Plattenkörpers der Abstand im Mittenbereich geringer sein, als in wenigstens einem der Seitenbereiche, so dass auf Grund des geringeren Abstands im Mittenbereich bei Belastung durch ein Tier die vorangehend angesprochene Muldenkonfiguration gebildet wird, wobei während des Vorgangs des Ablegens eines Tieres durch die Entstehung einer derartigen Muldenkonfiguration eine zusätzliche Elastizität in die Bodenbelagsplatte integriert ist.

Um dabei auch in einer Längsrichtung der Bodenbelagsplatte eine Variation der Muldentiefe erreichen zu können, wird vorgeschlagen, dass in der Plattenlängsrichtung der Abstand in wenigstens einem Seitenbereich und dem Mittenbereich sich zueinander unterschiedlich verändern. Insbesondere kann sich der Abstand im Mittenbereich im Wesentlichen gleichmäßig verändern, während weiter vorgesehen sein kann, dass in dem wenigstens einen Seitenbereich der Abstand in Richtung vom ersten Plattenlängsendbereich zum zweiten Plattenlängsendbereich sich wenigstens bereichsweise zunehmend verändert.

Zur Auflage der Bodenbelagsplatte auf einem vorbereiteten Untergrund wird vorgeschlagen, dass der Plattenkörper eine Plattenbasis und eine an der Untergrundauflageseite von der Plattenbasis sich weg erstreckende und die Untergrundauflagefläche bereitstellende Untergrundauflagestruktur umfasst. Das Bereitstellen einer Untergrundauflagestruktur ermöglicht eine leichtere Verformbarkeit der Bodenbelagsplatte bei Belastung durch ein Tier und erhöht somit den Komfort.

Die Plattenbasis kann vom ersten Plattenlängsendbereich zum zweiten Plattenlängsendbereich wenigstens bereichsweise eine im Wesentlichen gleichmäßige Dicke aufweisen, wobei dann zum Bereitstellen des in die erfindungsgemäß aufgebaute Bodenbelagsplatte integrierten Gefälles die Untergrundauflagestruktur vom ersten Plattenlängsendbereich zum zweiten Plattenlängsendbereich eine abnehmende Höhe aufweist.

Bei einer stabilen, gleichwohl jedoch einfach herzustellenden Ausgestaltungsform kann vorgesehen sein, dass die Untergrundauflagestruktur eine Mehrzahl von von der Plattenbasis sich weg erstreckenden und an ihrem von der Plattenbasis entfernten Endbereich im Wesentlichen die Untergrundauflagefläche bereitstellenden Auflagestegen umfasst, wobei vorzugsweise die Auflagestege eine erste Gruppe von zueinander im Wesentlichen parallelen ersten Auflagestegen und eine zweite Gruppe von zueinander im Wesentlichen parallelen und zu den ersten Auflagestegen unter einem Winkel orientierten zweiten Auflagestegen umfasst, wobei weiter vorzugsweise die ersten Auflagestege und die zweiten Auflagestege zur Untergrundauflageseite offene Einsenkungen begrenzen.

Das Entstehen lokaler muldenartiger Einsenkungen bei Belastung durch ein Tier, welche eine lokale Ansammlung von flüssigen Tierausscheidungen zur Folge haben könnten, kann dadurch vermieden werden, dass in wenigstens einem Teil der, vorzugsweise allen Einsenkungen eine von der Plattenbasis sich weg erstreckende und an wenigstens einen die Einsenkung begrenzenden ersten Auflagesteg oder/und zweiten Auflagesteg anschließende Versteifungsrippenstruktur vorgesehen ist. Hierzu kann beispielsweise vorgesehen sein, dass die Versteifungsrippenstruktur wenigstens eine zu den ersten Auflagestegen im Wesentlichen parallele erste Versteifungsrippe oder/und wenigstens eine zu den zweiten Auflagestegen im Wesentlichen parallele zweite Auflagerippe umfasst oder/und dass wenigstens bereichsweise die Höhe der Versteifungsrippenstruktur ausgehend von der Plattenbasis geringer ist, als die Höhe der Untergrundauflagestruktur. Durch eine derartige Ausgestaltung kann bei effizienter Versteifungswirkung eine einfache Herstellbarkeit gewährleistet werden.

Um auch in den Randbereichen einer erfindungsgemäß aufgebauten Bodenbelagsplatte eine gegen ungewollte Verformung wirkende Stabilität bereitzustellen, wird vorgeschlagen, dass die Untergrundauflagestruktur an wenigstens einem Querrandbereich oder/und wenigstens einem Längsrandbereich des Plattenkörpers einen Randsteg umfasst, wobei vorzugsweise an wenigstens einem Querrandbereich oder/und wenigstens einem Längsrandbereich vorzugsweise in einem der Tierauflageseite nahen Bereich ein bezüglich des Randstegs nach außen vorspringender Randvorsprungsbereich vorgesehen ist.

Der Plattenkörper kann mit elastischem Material, vorzugsweise Gummimaterial aufgebaut sein. Hier eignet sich insbesondere im Recyclingverfahren gewonnenes Gummigranulat, welches durch Klebstoff, beispielsweise polyurethanbasierend, oder/und Vulkanisieren gebunden wird. Insbesondere an einer die Tierauflagefläche bereitstellenden Seite kann derartiges Recyclingmaterial mit Neugummimaterial überzogen sein, welches eine erhöhte Verschleißfestigkeit aufweisen kann.

Gemäß einem weiteren Aspekt betrifft die vorliegende Erfindung ein Verfahren zur Herstellung einer elastisch verformbaren Platte, insbesondere mit dem erfindungsgemäßen Aufbau, umfassend die Maßnahmen:
a) Eingeben von partikelartigem Aufbaumaterial für einen Plattenkörper in eine erste Form,
b) Aufbringen einer zweiten Form derart, dass ein das partikelartige Aufbaumaterial einschließendes und der Gestalt der herzustellenden Platte entsprechendes Volumen durch die erste Form und die zweite Form umschlossen ist,
c) Binden des partikelartigen Aufbaumaterials durch Druck- oder/und Temperaturbeaufschlagung,
d) Entfernen einer der Formen, vorzugsweise der zweiten Form, und dabei Halten des durch das gebundene Aufbaumaterial bereitgestellten Plattenkörpers an der anderen Form, vorzugsweise der ersten Form, durch Formschlusseingriff eines an dem Plattenkörper gebildeten Vorsprungsbereichs mit einem an der anderen Form gebildeten Hinterschneidungsbereich,
e) Entfernen des Plattenkörpers von der anderen Form durch Aufheben des Formschlusseingriffs durch Verformung der Platte.

Durch das Bereitstellen des bei Herstellung einer Bodenbelagsplatte integral angeformten Vorsprungsbereichs kann dafür gesorgt werden, dass der Vorgang des Auseinandernehmens der beiden Formen in definierter Art und Weise so abläuft, dass die eine Form, also beispielsweise die zweite Form, zunächst abgenommen wird. Dies kann beispielsweise die Form sein, in welcher als Formnegativ eine Untergrundauflagestruktur bzw. eine Versteifungsrippenstruktur abgebildet ist. Da hier sehr viele ineinander eingreifende Abschnitte der Form einerseits und der herzustellenden Bodenbelagsplatte andererseits entstehen, welche vergleichsweise schwer voneinander zu trennen sind, wird durch den Formschlusseingriff der Bodenbelagsplatte mit der anderen Form, also beispielsweise der ersten Form, das Loslösen von der einen Form erzwungen. Erst wenn dies geschehen ist, wird die Bodenbelagsplatte durch Verformung derselben und dabei Aufheben des Formschlusseingriffs von der anderen Form losgelöst.

Die Erfindung betrifft ferner einen Bodenbelag für einen Tierstall, umfassend eine Mehrzahl von erfindungsgemäß aufgebauten bzw. nach dem erfindungsgemäßen Verfahren hergestellten Bodenbelagsplatten. Diese liegen mit ihrer an der Untergrundauflageseite vorgesehenen Untergrundauflagefläche auf einem Untergrund, vorzugsweise einem Betonuntergrund auf.

Die vorliegende Erfindung wird nachfolgend mit Bezug auf die beiliegenden Figuren detailliert beschrieben. Es zeigt:
- Fig. 1: in perspektivischer Ansicht eine Bodenbelagsplatte für einen Tierstall, betrachtet von einer Untergrundauflageseite,
- Fig. 2: die in Fig. 1 dargestellte Bodenbelagsplatte in Draufsicht, betrachtet von der Untergrundauflageseite;
- Fig. 3: die Bodenbelagsplatte der Fig. 1 in Draufsicht, betrachtet von einer Tierauflageseite,
- Fig. 4: eine Längsschnittansicht der Bodenbelagsplatte, geschnitten längs einer Linie IV-IV in Fig. 3;
- Fig. 5: eine prinzipartige Längsschnittdarstellung einer Bodenbelagsplatte, geschnitten längs einer Linie V-V in Fig. 2 (durchgezogen dargestellt) bzw. geschnitten längs einer Linie V'-V' in Fig. 2 (mit Strichlinie dargestellt);
- Fig. 6: eine Prinzip-Querschnittansicht einer Bodenbelagsplatte, geschnitten längs einer Linie VI-VI in Fig. 5;
- Fig. 7: eine Prinzip-Querschnittansicht einer Bodenbelagsplatte, geschnitten längs einer Linie VII-VII in Fig. 5;

- Fig. 8: eine Prinzip-Querschnittansicht einer Bodenbelagsplatte, geschnitten längs einer Linie \/III-VIII in Fig. 5;
- Fig. 9: in prinzipieller Darstellung einen Herstellungsvorgang einer Bodenbelagsplatte mit zwei Formen.

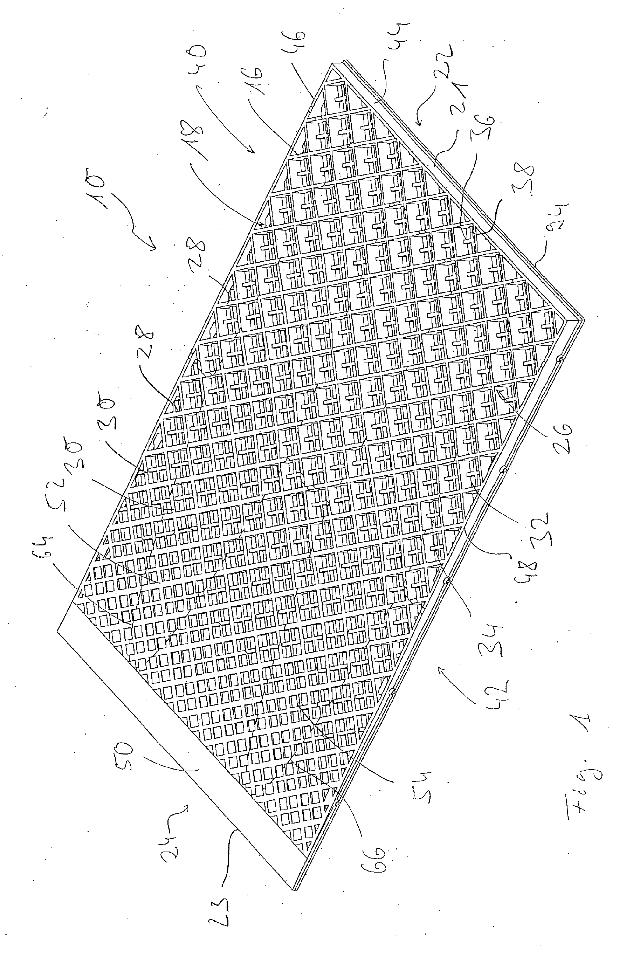

Die Fig. 1 bis 8 zeigen zum Teil in perspektivischer Ansicht, zum Teil in prinzipieller Ansicht den grundsätzlichen Aufbau einer Bodenbelagsplatte 10, wie sie insbesondere im Bereich von Schweineställen Anwendung finden kann. Die in Fig. 1 in perspektivischer Ansicht von unten betrachtete Bodenbelagsplatte 10 ist vorzugsweise als ein Plattenkörper 11 aufgebaut. Dieser kann beispielsweise mit durch Recycling gewonnenem Gummigranulat aufgebaut sein. Dieses kann durch Vulkanisieren oder durch Einsatz von Klebstoff, beispielsweise Polyurethan basierend, verpresst und verklebt sein. Um dort, wo eine derartige Bodenbelagsplatte 10 in Kontakt mit Tieren kommt, die Stabilität zu erhöhen, kann diese an Oberflächenbereichen mit einer bei Herstellung der Belagsplatte 10 erstmals vulkanisiertem Gummimaterial aufgebaut sein.

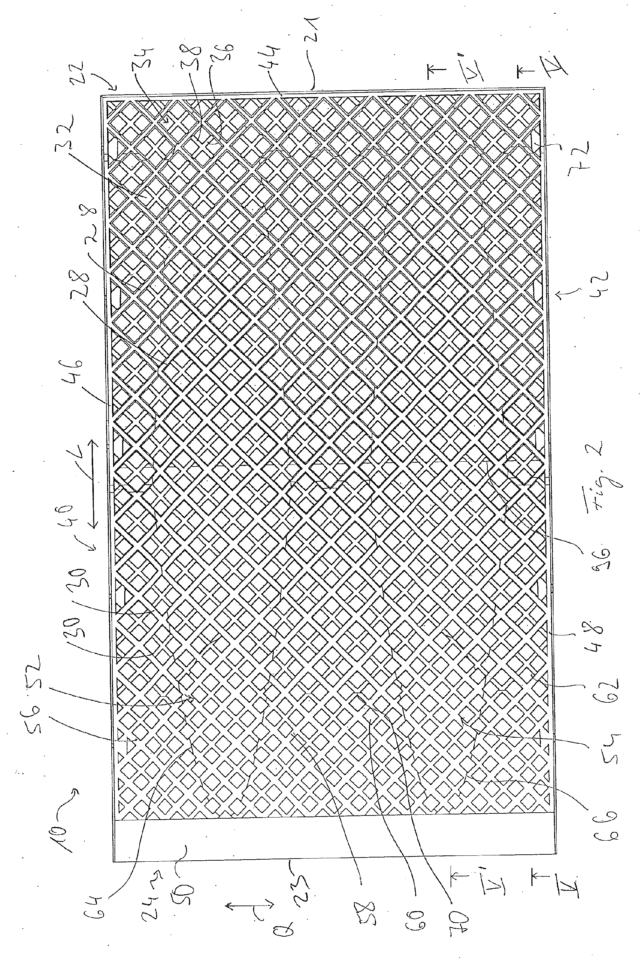

Die Bodenbelagsplatte 10 weist eine Tierauflagefläche 12 an einer Tierauflageseite 14 auf und weist eine nachfolgend noch detaillierter erläuterte Untergrundauflagefläche 16 an einer in den Fig. 1 und 2 auch sichtbaren Untergrundauflageseite 18 auf.

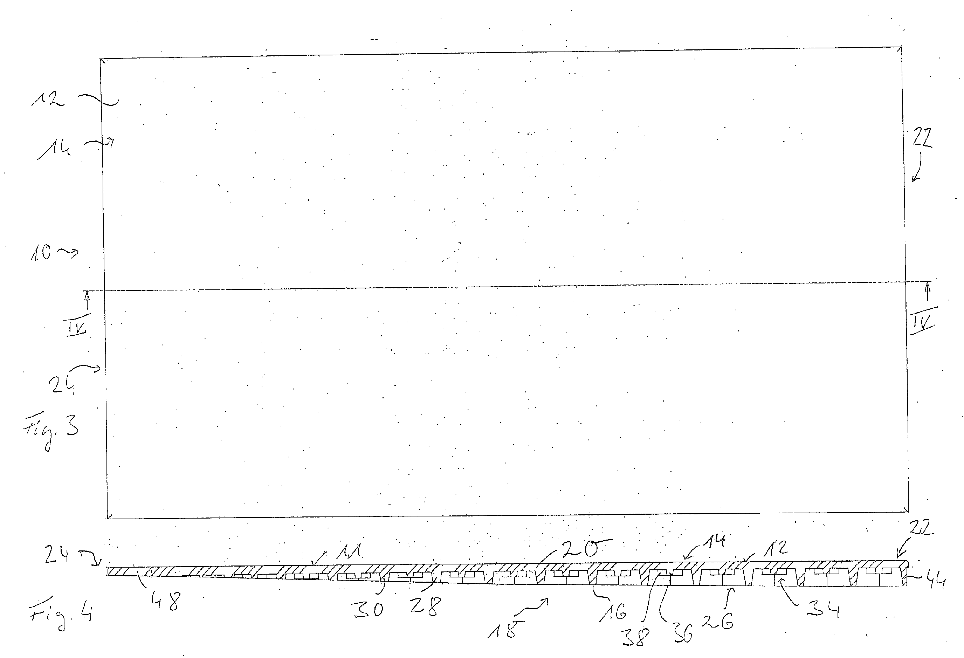

Der Plattenkörper 11 ist mit einer in der Schnittdarstellung der Fig. 4 erkennbaren Plattenbasis 20 ausgebildet, die sowohl in einer Plattenlängsrichtung L, als auch in einer Plattenquerrichtung Q eine näherungsweise gleichmäßige Dicke im Bereich von 18 bis 20 mm aufweisen kann. Die Plattenbasis 20 erstreckt sich in der Plattenlängsrichtung L von einem Querrandbereich 21 an einem ersten Plattenlängsendbereich 22 zu einem Querrandbereich 23 an einem zweiten Plattenlängsendbereich 24. An der einem Untergrund, beispielsweise einem Betonuntergrund, zugewandt zu positionierenden Seite der Plattenbasis 20 ist eine Mehrzahl von ersten Auflagestegen 28 und eine Mehrzahl von bezüglich der ersten Auflagestege 28 im Wesentlichen orthogonal verlaufenden, zueinander sich ebenfalls parallel erstreckenden zweiten Auflagestegen 30 vorgesehen. Zu erkennen ist in Fig. 2 deutlich, dass die ersten Auflagestege 28 und die zweiten Auflagestege 30 zueinander im Wesentlichen jeweils einen gleichen Abstand aufweisen, so dass durch jeweils zwei unmittelbar benachbarte erste Auflagestege 28 und zwei unmittelbar benachbarte zweite Auflagestege 30 eine zur Untergrundauflageseite offene Einsenkung 32 mit im Wesentlichen quadratischer Kontur begrenzt ist. Dabei ist die Orientierung dieser Einsenkungen 32 durch die zur Plattenlängsrichtung L sich unter einem Winkel von 45° bzw. 135° geneigt erstreckenden ersten Auflagestege 28 bzw. zweiten Auflagestege 30 definiert.

An ihren von der Plattenbasis 20 abgewandt liegenden Endbereichen stellen diese ersten Auflagestege 28 bzw. zweiten Auflagestege 30 in ihrer Gesamtheit im Wesentlichen die Untergrundauflagefläche 16 der Bodenbelagsplatte 10 bereit.

In vorzugsweise allen Einsenkungen 32 ist eine jeweilige Versteifungsrippenstruktur 34 vorgesehen. Diese umfasst in zueinander kreuzartiger Konfiguration angeordnet jeweils eine zu den ersten Auflagestegen 28 parallel verlaufende erste Versteifungsrippe 36 sowie eine zu den zweiten Auflagestegen 30 parallel verlaufende zweite Versteifungsrippe 38. In ihren Endbereichen schließen die Versteifungsrippen 36 bzw. 38 jeweils an einen zweiten Auflagesteg 30 bzw. ersten Auflagesteg 28 an. Zu erkennen ist auch, dass vorzugsweise die ersten Versteifungsrippen 36 näherungsweise mittig zwischen jeweils zwei unmittelbar benachbarten ersten Auflagestegen 28 verlaufen, während die zweiten Versteifungsrippen 38 vorzugsweise mittig zwischen zwei unmittelbar benachbarten zweiten Auflagestegen 30 verlaufen.

Des Weiteren zu erkennen ist insbesondere in Fig. 1, dass im Wesentlichen Längserstreckungsbereich der Bodenbereichsplatte 10 zwischen dem ersten Plattenlängsendbereich 22 und dem zweiten Plattenlängsendbereich 24 ausgehend von der Plattenbasis 20 die Versteifungsrippen 36, 38 eine geringere Erstreckungslänge aufweisen, als die Auflagestege 28, 30, so dass bei Belastung durch ein Tier die Bodenbelagsplatte 10 in ihrem wesentlichen Erstreckungsbereich lediglich mit den Auflagestegen 28, 30 auf einem Untergrund aufstehen wird. Die Versteifungsrippenstruktur 34 sorgt dafür, dass dort, wo nach unten, also zum Untergrund hin, offene Einsenkungen 32 vorhanden sind, keine lokalen und zur Flüssigkeitsansammlung an der Tierauflageseite 14 führende Einsenkungen entstehen können. Am ersten Querrandbereich 21 und den beiden Plattenquerendbereichen 40, 42 ist die Untergrundauflagestruktur 26 jeweils durch einen Randsteg 44, 46, 50 begrenzt. Diese weisen vorzugsweise die gleiche Erstreckungshöhe auf, wie die ersten Auflagestege 28 und die zweiten Auflagestege 30. Am zweiten Querrandbereich 23 gehen die in den Plattenquerendbereichen 40, 42 vorgesehenen Randstege 46, 48 in einen in der Plattenlängsrichtung L verlängerten Randsteg 50 über, der in der Plattenlängsrichtung L eine Erstreckungslänge L₁ von beispielsweise etwa 10 mm aufweisen kann.

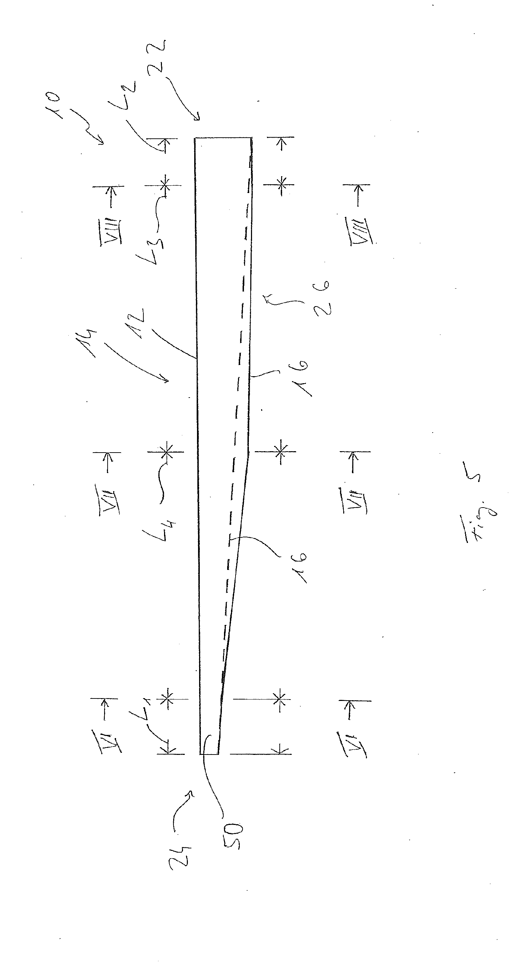

Die perspektivische Ansicht der Fig. 1 und die Seitenansichten der Fig. 4 und 5 zeigen, dass die Bodenbelagsplatte 10 derart gestaltet ist, dass sie vom ersten Plattenlängsendbereich 22 zum zweiten Plattenlängsendbereich 24 ein Gefälle aufweist. Dies bedeutet, dass dann, wenn die Untergrundauflagestruktur 26 mit ihrer Untergrundauflagefläche 16 auf einem horizontal orientierten Untergrund, also beispielsweise Betonuntergrund, aufliegt, die Tierauflagefläche 12 im Wesentlichen über die gesamte Länge der Bodenbelagsplatte 10 in Plattenlängsrichtung L ein Gefälle aufweist. Dies unterstützt das Ableiten von Verunreinigungen, insbesondere flüssigen Verunreinigungen, wie z. B. Tierausscheidungen, von der Tierauflagefläche 12.

Das im Wesentlichen durch die Vorsprungshöhe der Untergrundauflagestruktur 26 von der Plattenbasis 20 bestimmte Gefälle kann in der Plattenlängsrichtung L und auch der Plattenquerrichtung Q variieren. Man erkennt dazu in den Fig. 1 und 2 bei Betrachtung von der Untergrundauflageseite 18 her, dass an der Bodenbelagsplatte 10 zwei in der Plattenquerrichtung Q nebeneinander positionierte Tierauflagebereiche 52, 54 gebildet sind. In den Tierauflagebereichen 52, 54 bzw. Mittenbereichen 53, 55 derselben kann die Vorsprungshöhe der Untergrundauflagestruktur 26 sich anders verändern, als an jeweiligen in der Plattenquerrichtung Q beidseits der Tierauflagebereiche 52, 54 vorgesehenen Seitenbereichen 56, 58 bzw. 60, 62. Aus diesem Grunde sind bei Betrachtung von der Untergrundauflageseite 18 her die Übergänge von den Seitenbereichen 56, 58 bzw. 60, 62 zu den Tierauflagebereichen 52, 54 durch an der Untergrundauflagefläche 16 der jeweiligen Auflagestege 28, 30 erscheinende Übergangskantenbereiche 64, 66 sichtbar. Deutlich zu erkennen ist in den Fig. 1 und 2, dass diese Übergangskantenbereiche 64, 66 die im Wesentlichen elliptisch geformten Tierauflagebereiche 52, 54 umgrenzen.

Bei Betrachtung der Fig. 5 ist zu erkennen, dass der mit Strichlinie eingezeichnete und in der Plattenlängsrichtung L im Mittenbereich 55 des Tierauflagebereichs 54 verlaufende Schnitt der Bodenbelagsplatte 10 einen im Wesentlichen linearen, gleichmäßigen Anstieg der Untergrundauflagefläche 16 der Untergrundauflagestruktur 26 vom zweiten Plattenlängsendbereich 24 bis zum ersten Plattenlängsendbereich 22 aufweist. Dabei kann sich dieser lineare Anstieg bis zu den unmittelbaren Enden der jeweiligen Plattenlängsendbereiche 22, 24, d. h. bis zu den Querrandbereichen 21, 23, also auch bis zum äußersten Ende des in der Plattenlängsrichtung L erweiterten Randstegs 50, fortsetzen.

In der Plattenquerrichtung Q außerhalb der Tierauflagebereiche 52, 54, also beispielsweise im Seitenbereich 62, kann, wie durch die durchgezogene Linie in Fig. 5 veranschaulicht, die Untergrundauflagestruktur 26 derart geformt sein, dass das Gefälle bzw. die Variation ihres Abstands zur Tierauflageseite 12 vom ersten Plattenlängsendbereich 22 zum zweiten Plattenlängsendbereich 24 zunimmt. So kann beispielsweise im ersten Plattenlängsendbereich 22 ein Längenabschnitt L₂ mit einer Länge von etwa 150 mm vorgesehen sein, in welchem außerhalb der Tierauflagebereiche 52, 54, also insbesondere den Seitenbereichen 56, 58, 60, 62, die Untergrundauflagestruktur 26 mit ihrer Untergrundauflagefläche 16 einen im Wesentlichen konstanten Abstand zur Tierauflagefläche 12 aufweist, so dass in diesen Bereichen der Bodenbelagsplatte 10 im Wesentlichen kein Gefälle vorgesehen ist. In einem dann folgenden Längenabschnitt L₃ kann in Richtung zum zweiten Plattenlängsendbereich 24 hin der Abstand der Untergrundauflagefläche 16 von der Tierauflagefläche 12 mit einem vergleichsweise geringen Gefälle im Bereich von 1 mm bis 1,5 mm auf 100 mm Länge in Plattenlängsrichtung L abnehmen. In einem dann folgenden Längenabschnitt L₄ kann in den Seitenbereichen 56, 58, 60, 62 der Abstand der Untergrundauflagefläche 16 von der Tierauflagefläche 12 mit einem stärkeren Gefälle, beispielsweise im Bereich von 1,5 mm bis 2,5 mm auf 100 mm Länge abnehmen, wobei dieses stärkere Gefälle sich dann bis zum äußersten Ende, also auch zum äußersten Ende des erweiterten Randstegs 50, fortgesetzt sein kann oder sich bis zum Inneren Ende des erweiterten Randstegs 50 fortsetzen kann, so dass dieser in der Plattenquerrichtung Q in allen Bereichen im Wesentlichen die gleiche Dicke aufweist.

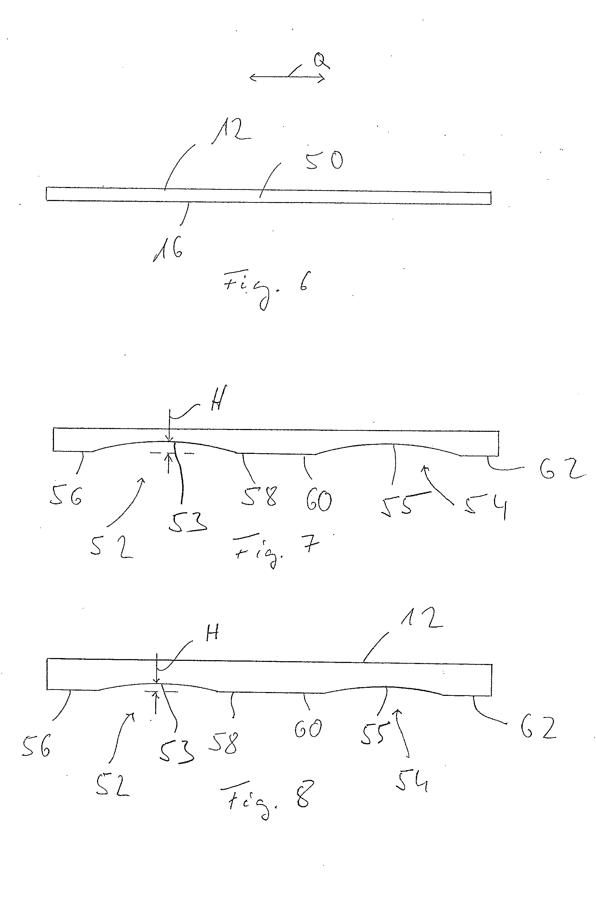

Die aus der vorangehenden Variation der Höhe der Untergrundauflagestruktur 26 sich ergebende Profilierung ist in den Fig. 6 bis 8 verdeutlicht. Dabei zeigt die Fig. 6 einen Querschnitt im Bereich des erweiterten Randstegs 50, welcher, wie vorangehend dargelegt, in der Plattenquerrichtung Q beispielsweise eine näherungsweise konstante Dicke aufweisen kann. Die Fig. 7 zeigt einen Schnitt im dem Bereich, in welchem die Längenabschnitte L₃ und L₄ aneinander angrenzen. In diesem Bereich ist der Höhenunterschied H der Untergrundauflagestruktur 26 zwischen den Seitenbereichen 56, 58 bzw. 60, 62 einerseits und den zentralen Mittenbereichen 53, 55 der Tierauflagebereiche 52, 54 maximal. Dort, wo der Längenabschnitt L₃ in den Längenabschnitt L₂ übergeht, ist dieser Höhenunterschied H dann bereits deutlich kleiner, was die Fig. 8 veranschaulicht.

Durch die Variation der Vorsprungshöhe der Untergrundauflagestruktur 26 von der Plattenbasis 20 in der Plattenquerrichtung Q und die unterschiedliche Entwicklung der Vorsprungshöhe in den Seitenbereichen 56, 58, 60, 62 einerseits und den Mittenbereichen 53, 55 der Tierauflagebereiche 52, 54 andererseits wird bei Belastung der Bodenbelagsplatte 10 in einem jeweiligen Tierauflagebereich 52, 54 durch ein sich darauf ablegendes Tier, beispielsweise Schwein, eine muldenartige Einsenkung generiert, welche ein Tier allgemein als angenehm empfindet. Gleichwohl ist dafür gesorgt, dass insbesondere dann, wenn die Belastung durch ein Tier wieder aufgehoben ist, die Bodenbelagsplatte 10 aufgrund ihrer inhärenten Elastizität bzw. Rückstelleigenschaft wieder in einen Zustand gelangt, in welchem eine derartige muldenartige Einsenkung nicht vorhanden ist, die Tierauflageseite 12 also ein durchgehendes Gefälle vom ersten Plattenlängsendbereich 22 zum zweiten Plattenlängsendbereich 24 aufweist. Dabei kann die Untergrundauflagestruktur 26 in den Tierauflagebereichen 52, 54 dann vom Untergrund abheben.

Dass bei der Belastung durch ein Tier auch in den Tierauflagebereichen 52, 54 lokal dort, wo die nach unten offenen Einsenkungen 32 vorhanden sind, keine übermäßige wellenartige Einformung entsteht, wird durch die in den Einsenkungen 32 jeweils vorhandenen Versteifungsrippen 36, 38 verhindert, welche im größten Längenbereich der Bodenbelagsplatte 10 eine geringere Vorsprungshöhe aufweisen, als die Auflagestege 28, 30. Dort, wo aufgrund des integrierten Gefälles die Vorsprungshöhe der Untergrundauflagestruktur 26, also der Auflagestege 28, 30, kleiner wird, als die Vorsprungshöhe der Versteifungsrippen 36, 38 von der Platten basis 20, ist in Fig. 2 ein Übergangsbereich durch eine in Querrichtung verlaufende Grenzlinie 70 erkennbar. Im Bereich zwischen der Grenzlinie 70 und dem Randsteg 50 weisen die Auflagestege 28, 30 und die Versteifungsrippen 36, 38 die gleiche Vorsprungshöhe von der Plattenbasis 20 auf.

Weiter zu erkennen ist insbesondere in Fig. 2, dass in den Plattenquerendbereichen 40, 42 an einigen Längenabschnitten in Einsenkungen 32 massive Materialblöcke 72 vorgesehen sind. In diese können Verbindungsstifte eingesetzt werden, um unmittelbar benachbart liegende Bodenbelagsplatten 10 fest aneinander anzubinden.

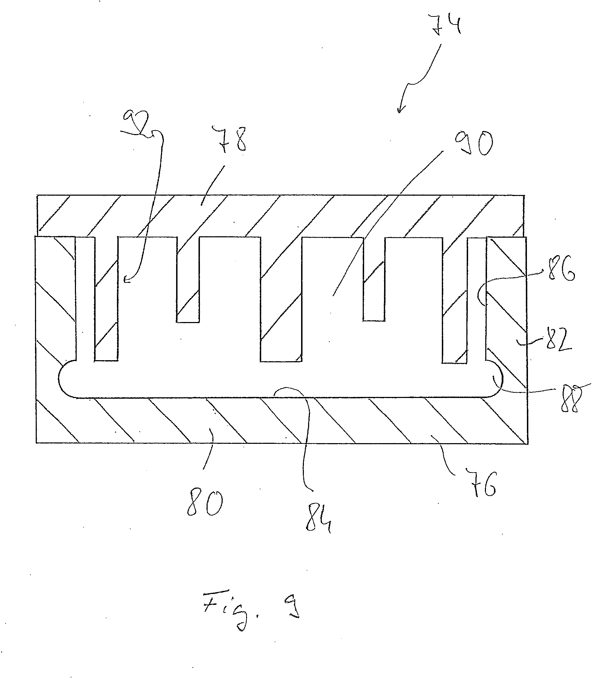

Wie vorangehend dargelegt, wird eine derartige Bodenbelagsplatte 10 vorzugsweise durch das Verpressen von Gummigranulat hergestellt. Dabei kann vorzugsweise durch Recycling gewonnenes Altgummigranulat, beispielsweise aus zerkleinerten Fahrzeugreifen, eingesetzt werden. Dieses kann durch einen Klebstoff, beispielsweise Polyurethanklebstoff, oder/und durch Vulkanisieren bei Druck- und Temperaturausübung gebunden werden. Die Herstellung einer derartigen Bodenbelagsplatte 10 wird nachfolgend mit Bezug auf die Fig. 9 in prinzipieller Weise erläutert.

Die Fig. 9 zeigt eine zum Herstellen der Bodenbelagsplatte 10 eingesetzte Formanordnung 74 mit einer ersten Form 76 und einer zweiten Form 78. Die erste Form 76 hat eine im Wesentlichen schalenartige Konfiguration mit einem Bodenbereich 80 und einem Wandungsbereich 82. Der Bodenbereich 80 bildet mit seiner Innenoberfläche 84 die Tierauflagefläche 12. Der Wandungsbereich 82 bildet mit seiner Innenoberfläche 86 die Außenseite der Randstege 44, 46, 48, 50 ab. Am Übergangsbereich zwischen der Innenoberfläche 84 des Bodenbereichs 80 und der Innenoberfläche 86 des Wandungsbereichs 82 ist ein vorzugsweise wenigstens in Zuordnung zum ersten Plattenlängsendbereich 22 und den beiden Plattenquerendbereichen 40, 42 vorgesehener, vorzugsweise unterbrechungsfrei durchlaufender Hinterschneidungsbereich 88 gebildet.

Die zweite Form 78 ist mit einer im Wesentlichen deckelartigen Konfiguration bereitgestellt und umschließt zusammen mit der ersten Form 76 den Volumenbereich 90, in welchem beim Herstellungsvorgang das Aufbaumaterial der Bodenbelagsplatte 10, also das Gummigranulat oder dergleichen, vorgesehen ist. An der zweiten Form 78 ist eine mit 92 bezeichnete Vorsprungsstruktur vorgesehen, welche sich in das Aufbaumaterial der Bodenbelagsplatte 10 hinein erstreckt und somit die Struktur an der Untergrundauflageseite 18 der Bodenbelagsplatte 10 abbildet.

Zur Herstellung einer derartigen Bodenbelagsplatte 10 kann in die erste Form 76 das Aufbaumaterial, also beispielsweise Granulatmaterial, eingegeben werden. Um eine besonders stabile Oberfläche zu erhalten, ist es auch möglich, die erste Form 76 zunächst mit einer Lage von Neugummimaterial auszukleiden und dann das Granulatmaterial einzugeben. Daraufhin wird die zweite Form 78 aufgebracht, so dass sie mit ihrer Vorsprungsstruktur 92 das im Volumen 90 vorhandene Granulatmaterial verdrängt und komprimiert. Durch Erhitzen der Formen 76, 78 kann das Granulatmaterial dann verklebt bzw. durch Vulkanisieren miteinander und ggf. an die die Oberfläche zumindest an der Tierauflageseite 12 bereitstellende Neugummilage angebunden werden. Nachfolgend wird dann die zweite Form 78 abgehoben. Um dabei zu verhindern, dass durch die in die Untergrundauflagestruktur eingreifende Vorsprungsstruktur 92 die Bodenbelagsplatte 10 aus der ersten Form 76 herausgezogen wird und an der zweiten Form 78 verbleibt, ist die Hinterschneidung 88 vorgesehen. Durch diese Hinterschneidung 88 wird an der Bodenbelagsplatte 10 ein seitlich vorspringender Randvorsprungsbereich 94 gebildet. Dieser steht in Formschlusseingriff mit der Hinterscheidung 88 und hält die neu hergestellte Bodenbelagsplatte 10 an der ersten Form 76. Nachdem die zweite Form 78 vollständig entfernt ist, kann die grundsätzlich elastisch verformbare Bodenbelagsplatte 10 unter Auflösen des Formschlusseingriffs des Randvorsprungsbereichs 94 mit der Hinterscheidung 88 aus der ersten Form 76 herausgezogen werden.

Um bei Integration des vorangehend beschriebenen Gefälles in eine Bodenbelagsplatte 10 dafür zu sorgen, dass mit einer etwas gleichmäßigeren Verteilung des Aufbaumaterials in der ersten Form 76 gearbeitet werden kann, kann grundsätzlich vorgesehen sein, dass dort, wo aufgrund des Gefälles die Untergrundauflagestruktur 26 eine geringere Höhe aufweist, die Plattenbasis 20 eine etwas größere bzw. zunehmende Dicke hat. Beispielsweise ist in Fig. 2 eine Grenzlinie 96 erkennbar, welche zum ersten Plattenlängsendbereich 22 hin einen Abschnitt der Plattenbasis 20 mit im Wesentlichen konstanter Dicke begrenzt und zum zweiten Plattenlängsendbereich 24 hin eine Plattenbasis 20 hin mit geringfügig zunehmender Dicke, beispielsweise einer Zunahme im Bereich von 1 mm bis 2 mm, begrenzt.

Es sei darauf hingewiesen, dass die mit Bezug auf die Fig. 9 beschriebene Vorgehensweise bei der Herstellung einer Bodenbelagsplatte 10 besonders vorteilhaft zur Anwendung kommen kann, wenn die Bodenbelagsplatte 10 mit der in den Fig. 1 bis 8 auch erkennbaren Strukturierung an der Untergrundauflageseite ausgebildet ist. Selbstverständlich kann diese Art und Weise der Herstellung auch bei anders strukturierten Bodenbelagsplatten, insbesondere auch bei Bodenbelagsplatten ohne integriertem Gefälle zum Einsatz kommen.

Es sei des Weiteren darauf hingewiesen, dass eine mit integriertem Gefälle ausgebildete Bodenbelagsplatte auch mit andersartiger Strukturierung an der Untergrundauflageseite oder/und ggf. auch einer Strukturierung an der Tierauflageseite ausgebildet sein kann. Insbesondere könnte an der Tierauflageseite zum Erhöhen des Komforts für ein Tier eine Strukturierung vorgesehen sein, wie sie an der Oberfläche von Golfbällen gebildet ist, also mit einer Vielzahl von zueinander versetzt liegenden kugelkalottenartigen Einsenkungen oder dergleichen.

## Patentansprüche

1. Bodenbelagsplatte für einen Tierstall, umfassend einen auf einem Untergrund zu verlegenden Plattenkörper (11) mit einer Untergrundauflagefläche (16) an einer Untergrundauflageseite (18) und einer Tierauflagefläche (12) an einer Tierauflageseite (14), wobei ein Abstand zwischen der Tierauflagefläche (12) und der Untergrundauflagefläche (16) von einem ersten Plattenlängsendbereich (22) zu einem zweiten Plattenlängsendbereich (24) abnimmt.

2. Bodenbelagsplatte nach Anspruch 1,
**dadurch gekennzeichnet, dass** der Abstand von einem am ersten Plattenlängsendbereich (22) vorgesehenen ersten Querrandbereich (21) zu einem am zweiten Plattenlängsendbereich (24) vorgesehenen zweiten Querrandbereich (23) abnimmt oder/und dass angrenzend an den ersten Querrandbereich (21) oder/und den zweiten Querrandbereich (23) der Abstand im Wesentlichen konstant ist.

3. Bodenbelagsplatte nach Anspruch 1 oder 2,
**dadurch gekennzeichnet, dass** in wenigstens einem Längenabschnitt (L₂, L₃, L₄) des Plattenkörpers (11) der Abstand sich in einer Plattenquerrichtung (Q) verändert.

4. Bodenbelagsplatte nach einem der Ansprüche 1 bis 3,
**dadurch gekennzeichnet, dass** an dem Plattenkörper (11) wenigstens ein, vorzugsweise zwei in einer Plattenquerrichtung (Q) nebeneinander positionierte Tierauflagebereiche (52, 54) vorgesehen sind, wobei jeder Tierauflagebereich (52, 54) zwei bezüglich der Plattenquerrichtung (Q) nebeneinander liegende Seitenbereiche (56, 58, 60, 62) und dazwischen einen Mittenbereich (53, 55) aufweist.

5. Bodenbelagsplatte nach Anspruch 3 und 4,
**dadurch gekennzeichnet, dass** in wenigstens einem Längenbereich (L₂, L₃, L₄) des Plattenkörpers (11) der Abstand im Mittenbereich (53, 55) geringer ist, als in wenigstens einem der Seitenbereiche (56, 58, 60, 62), wobei vorzugsweise in der Plattenlängsrichtung (L) der Abstand in wenigstens einem Seitenbereich (56, 58, 60, 62) und in dem Mittenbereich (53, 55) sich zueinander unterschiedlich verändert, wobei weiter vorzugsweise der Abstand im Mittenbereich (53, 55) sich im Wesentlichen gleichmäßig verändert.

6. Bodenbelagsplatte nach Anspruch 5,
**dadurch gekennzeichnet, dass** in dem wenigstens einem Seitenbereich (56, 58, 60, 62) der Abstand in Richtung vom ersten Plattenlängsendbereich (22) zum zweiten Plattenlängsendbereich (24) sich wenigstens bereichsweise zunehmend verändert.

7. Bodenbelagsplatte nach einem der Ansprüche 1 bis 6,
**dadurch gekennzeichnet, dass** der Plattenkörper (11) eine Plattenbasis (20) und eine an der Untergrundauflageseite (18) von der Plattenbasis (20) sich weg erstreckende und die Untergrundauflagefläche (16) bereitstellende Untergrundauflagestruktur (26) umfasst.

8. Bodenbelagsplatte nach Anspruch 7,
**dadurch gekennzeichnet, dass** die Plattenbasis (20) vom ersten Plattenlängsendbereich (22) zum zweiten Plattenlängsendbereich (24) wenigstens bereichsweise eine im Wesentlichen gleichmäßige Dicke aufweist oder/und dass die Plattenbasis (20) vom ersten Plattenlängsendbereich (22) zum zweiten Plattenlängsendbereich (24) wenigstens bereichsweise eine zunehmende Dicke aufweist oder/und dass die Untergrundauflagestruktur (26) vom ersten Plattenlängsendbereich (22) zum zweiten Plattenlängsendbereich (24) eine abnehmende Höhe aufweist.

9. Bodenbelagsplatte nach Anspruch 7 oder 8,
**dadurch gekennzeichnet, dass** die Untergrundauflagestruktur (26) eine Mehrzahl von von der Plattenbasis (26) sich weg erstreckenden und an ihrem von der Plattenbasis (20) entfernten Endbereich im Wesentlichen die Untergrundauflagefläche (16) bereitstellenden Auflagestegen (28, 30) umfasst, wobei vorzugsweise die Auflagestege (28, 30) eine erste Gruppe von zueinander im Wesentlichen parallelen ersten Auflagestegen (38) und eine zweite Gruppe von zueinander im Wesentlichen parallelen und zu den ersten Auflagestegen (28) unter einen Winkel orientierten zweiten Auflagestegen (30) umfasst, wobei weiter vorzugsweise die ersten Auflagestege (28) und die zweiten Auflagestege (30) zur Untergrundauflageseite offene Einsenkungen (32) begrenzen.

10. Bodenbelagsplatte nach Anspruch 9,
**dadurch gekennzeichnet, dass** in wenigstens einem Teil der, vorzugsweise allen Einsenkungen (32) eine von der Plattenbasis (20) sich weg erstreckende und an wenigstens einen die Einsenkung (32) begrenzenden ersten Auflagesteg (28) oder/und zweiten Auflagesteg (30) anschließende Versteifungsrippenstruktur (34) vorgesehen ist.

11. Bodenbelagsplatte nach Anspruch 10,
**dadurch gekennzeichnet, dass** die Versteifungsrippenstruktur (34) wenigstens eine zu den ersten Auflagestegen (28) im Wesentlichen parallele erste Versteifungsrippe (36) oder/und wenigstens eine zu den zweiten Auflagestegen (30) im Wesentlichen parallele zweite Auflagerippe (38) umfasst oder/und dass wenigstens bereichsweise die Höhe der Versteifungsrippenstruktur (34) ausgehend von der Plattenbasis (20) geringer ist, als die Höhe der Untergrundauflagestruktur (26).

12. Bodenbelagsplatte nach einem der Ansprüche 10 bis 11,
**dadurch gekennzeichnet, dass** die Untergrundauflagestruktur (26) an wenigstens einem Querrandbereich (21, 23) oder/und wenigstens einem Längsrandbereich des Plattenkörpers (11) einen Randsteg (44, 46, 48, 50) umfasst, wobei vorzugsweise an wenigstens einem Querrandbereich (21, 23) oder/und wenigstens einem Längsrandbereich vorzugsweise in einem der Tierauflageseite (14) nahen Bereich ein bezüglich des Randstegs (44, 46, 48) nach außen vorspringender Randvorsprungsbereich (92) vorgesehen ist.

13. Bodenbelagsplatte nach einem der Ansprüche 1 bis 12,
**dadurch gekennzeichnet, dass** der Plattenkörper (11) mit elastischem Material, vorzugsweise Gummimaterial, aufgebaut ist.

14. Verfahren zur Herstellung einer elastisch verformbaren Platte, insbesondere Bodenbelagsplatte (10) nach einem der vorangehenden Ansprüche, umfassend die Maßnahmen:
a) Eingeben von partikelartigem Aufbaumaterial für einen Plattenkörper (11) in eine erste Form (76),
b) Aufbringen einer zweiten Form (78) derart, dass ein das partikelartige Aufbaumaterial einschließendes und der Gestalt des herzustellenden Plattenkörpers entsprechendes Volumen (90) durch die erste Form (76) und die zweite Form (78) umschlossen ist,
c) Binden des partikelartigen Aufbaumaterials durch Druck- oder/und Temperaturbeaufschlagung,
d) Entfernen einer der Formen, vorzugsweise der zweiten Form (78), und dabei Halten des durch das gebundene Aufbaumaterial bereitgestellten Plattenkörpers (10) an der anderen Form, vorzugsweise der ersten Form (76), durch Formschlusseingriff eines an dem Plattenkörper (11) gebildeten Vorsprungsbereichs (90) mit einem an der anderen Form (76) gebildeten Hinterschneidungsbereich (88),
e) Entfernen des Plattenkörpers (11) von der anderen Form (76) durch Aufheben des Formschlusseingriffs durch Verformung des Plattenkörpers (11).

15. Bodenbelag für einen Tierstall, umfassend eine Mehrzahl von Bodenbelagsplatten (10) nach einem der Ansprüche 1 bis 13, vorzugsweise hergestellt mit einem Verfahren gemäß Anspruch 14, wobei die Bodenbelagsplatten (10) mit ihrer an der Untergrundauflageseite (18) vorgesehenen Untergrundauflagefläche (16) auf einem Untergrund, vorzugsweise Betonuntergrund, aufliegend positioniert sind.
